# EUROPEAN PATENT APPLICATION

(11) **EP 1 359 064 A2**
(43) Date of publication of application: **05.11.2003**
(21) Application number: 03006165.9
(22) Date of filing: 19.03.2003
(51) Int. Cl.: B60R 21/24

(54) **Front passenger airbag**

(30) Priority: 26.04.2002 US 376038 P
(71) Applicant: Breed Automotive Technology, Inc., Lakeland, Florida 33807-3050 (US)
(72) Inventor: Roychoudhury, Raj S., Bloomfield Hills, Michigan 48301 (US); Pang, Hyunsok, Bloomfield Hills, Michigan 48304 (US); Patel, Dhirenkumar, Sterling Heights, Michigan 48314 (US); Thomas, David E., North Branch, Michigan 48461 (US)
(74) Representative: Gislon, Gabriele

(57) **Abstract**

An airbag module has an inflator (350) with at least one exit port (352) located on one side of a body. Inflation gas exiting the exit port includes an axial component of flow, which exits the exit port in an axial direction; and an airbag assembly (200) comprising an outer airbag (202) and an inner airbag (300) . The inner airbag is disposed about the inflator to receive inflation gas before the inflation gas can substantially affect a trajectory of the inflating outer airbag. Inflation gas flows within the inner airbag in at least the axial direction. The inner airbag has first and second openings (306) to direct inflation gas into the inner bag with components of gas flow exiting the second opening(s)at a skewed angle, while a portion of the gas flow may optionally flow in a vertical up and down direction. The inner bag also includes a third opening disposed near a remote side of the inner bag for directing inflation gas into the outer bag in a direction generally opposite to the axial direction.

## Description

The present invention generally relates to airbags and more particularly to an airbag that finds use with inflators that have asymmetrically positioned gas exit ports.

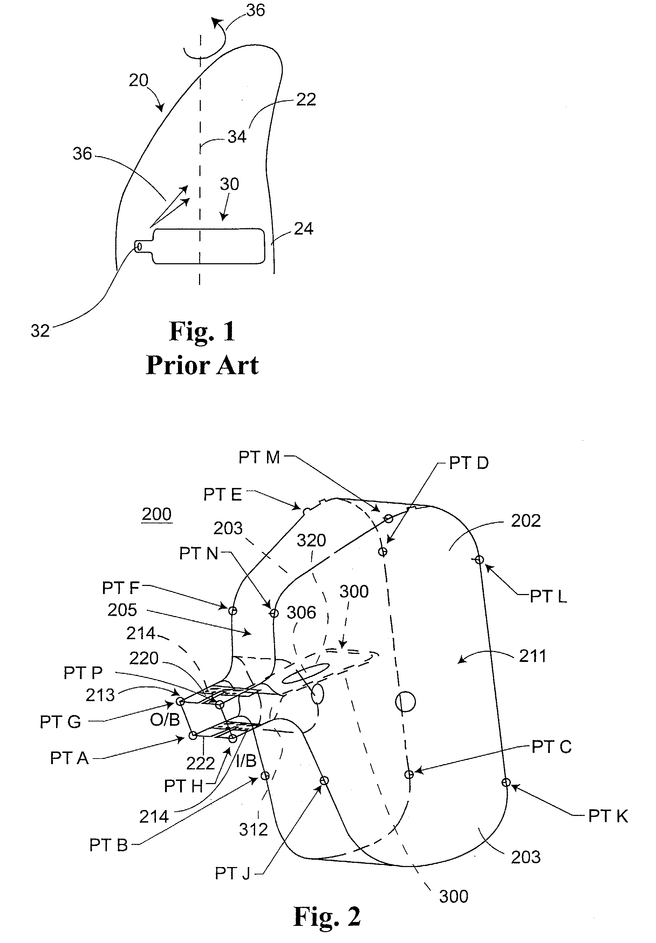

FIGURE 1 is exemplary of the prior art and shows an airbag 20 having an inflatable cushion portion 22 and a neck portion 24. An inflator 30, of known variety, is inserted within the neck portion and when activated produces inflation gas to inflate the airbag. Inflator 30 includes a plurality of gas exit ports 32. As can be seen, the exit ports are located on one side of the inflator's centerline 34. This type of configuration causes the cushion, during inflation, to skew to one side as the airbag approaches the occupant to be protected. Additionally, because of the initial asymmetric inflation of the airbag, the airbag during the latter moments of inflation will tend to bounce about the centerline and may often seem to wobble or rotate (see arrow 36) about the centerline 34. This bouncing results when the airbag, which was inflating in a skewed direction, becomes fully inflated and reacts against the fixedly positioned inflator.

Reference is briefly made to arrows 36, which diagrammatically illustrate the flow of inflation gas from the inflator 30 into the airbag. It can be shown that with certain types of inflators with asymmetrically placed exit ports the inflation gas actually flows out of these exit ports at an angle and across the body of the inflator. Consequently, the airbag initially skews in a direction that is opposite the placement of the exit ports. In the illustrated example, the exit ports are on the left-hand side of the inflator and the airbag initially inflates to the right-hand side.

The prior art prevents the skewing of the airbag during the initial periods of inflation by enveloping the inflator with a tube-like manifold, such as taught in US 5 340 147. This type of manifold includes a plurality of openings positioned longitudinally across the diffuser, which causes the inflation gas to enter the neck 24 of the airbag in a more uniform manner. While the performance differential provided by the separate manifold is desirable, it does increase the cost and mass of the airbag system.

Claim 1 provides an airbag module that overcomes these problems.

### BRIEF DESCRIPTION OF THE DRAWINGS

FIGURE 1 shows an exemplary prior art passenger airbag system.
FIGURE 2 is an isometric view of an airbag assembly.
FIGURE 3 shows one of the side panels of an outer airbag.
FIGURE 4a is a top plan view of an internal bag or sac used in conjunction with the outer airbag of FIGURE 2.
FIGURE 4b is a side view of the inner bag.
FIGURE 5 is an isometric view of the inner bag or sack.
FIGURE 6 is an enlarged view showing the connection between the inner and the outer bags.
FIGURE 7 is a top plan view of the airbag assembly showing the relation of the inner and the outer airbags.
FIGURE 8 is a plan view of the neck portion of the airbag assembly.
FIGURE 9 is an isometric view of an exemplary housing.
FIGURE 10 diagrammatically shows the housing, airbag assembly and inflator.

### DETAILED DESCRIPTION OF THE INVENTION

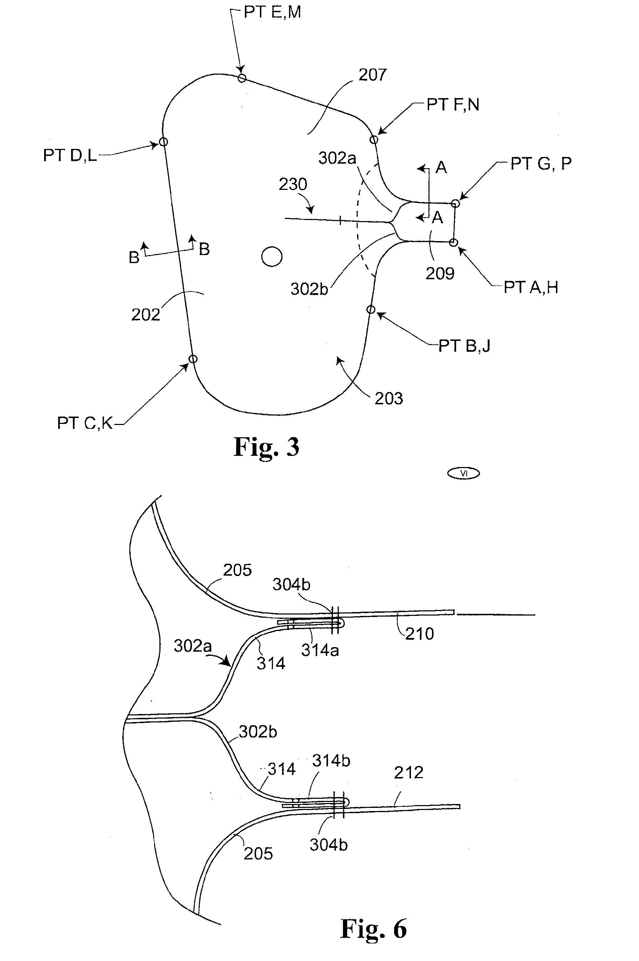

FIGUREs 2 and 3 are various views of an airbag assembly 200. The assembly includes an outer airbag 202 and an inner airbag, pouch or sac 300. The outer bag 202 can be formed using two side panels 203 and a center, elongated or main panel 205, which forms the top, front (face) and bottom of the outer airbag 202, as well as the top and bottom portions of a neck portion of the outer bag. Other constructions are within the scope of the invention.

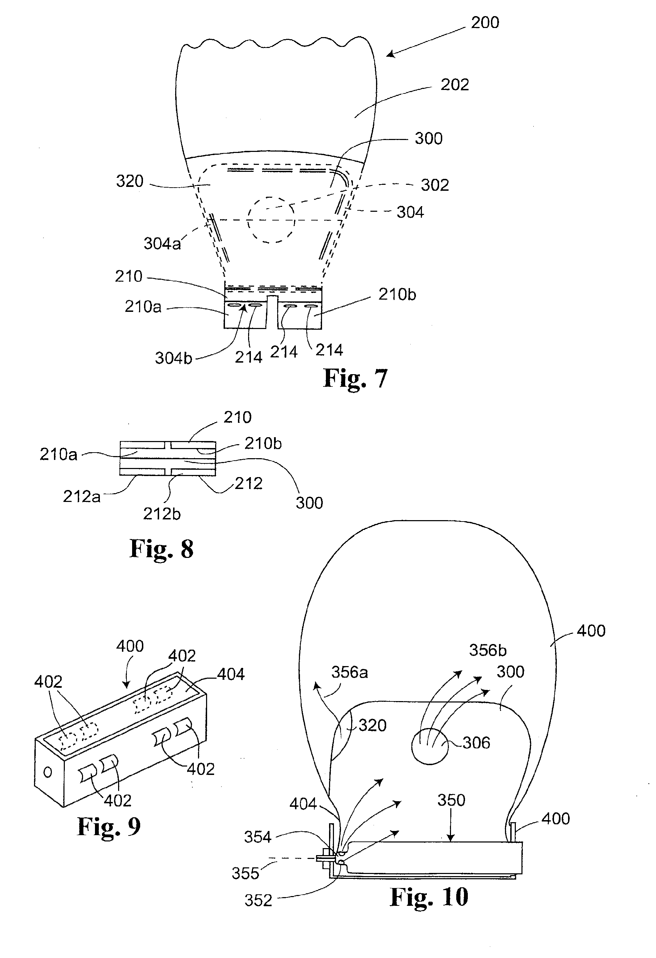

The shape of the outer bag can vary. In the illustrated embodiment each side panel 203 includes a large lobe 207 and an elongated portion 209, which forms part of the neck portion of the airbag 202. As can be seen in FIGURE 2, the various panels forming the airbag 202 define a cushion portion 211 and an open-ended neck portion 213. The neck portion 213 is generally rectangular in cross-section (other shapes are within the scope of the invention) and includes sides formed by the elongated portion 209 of each side panel and a top 210 and a bottom 212 (which may also be viewed as top and bottom flaps) formed by portions of the main panel 205 (see FIGURE 6). Each of the top and the bottom are divided into sections or flaps, such as 210a, 210b; 212a, 212b (see FIGURE 8). Each of the various sections includes a plurality of slots 214 (see Figures 2 and 7). As will be shown below, the neck portion 213 of the airbag 202 is fitted about the periphery of a mating rectangular-shaped housing and the slots 214 secured to tabs formed on the housing, thereby securing the neck of the airbag about the housing.

FIGUREs 9 and 10 show an exemplary housing 400 with a plurality of tabs 402, which are received within respective slots or openings 214.

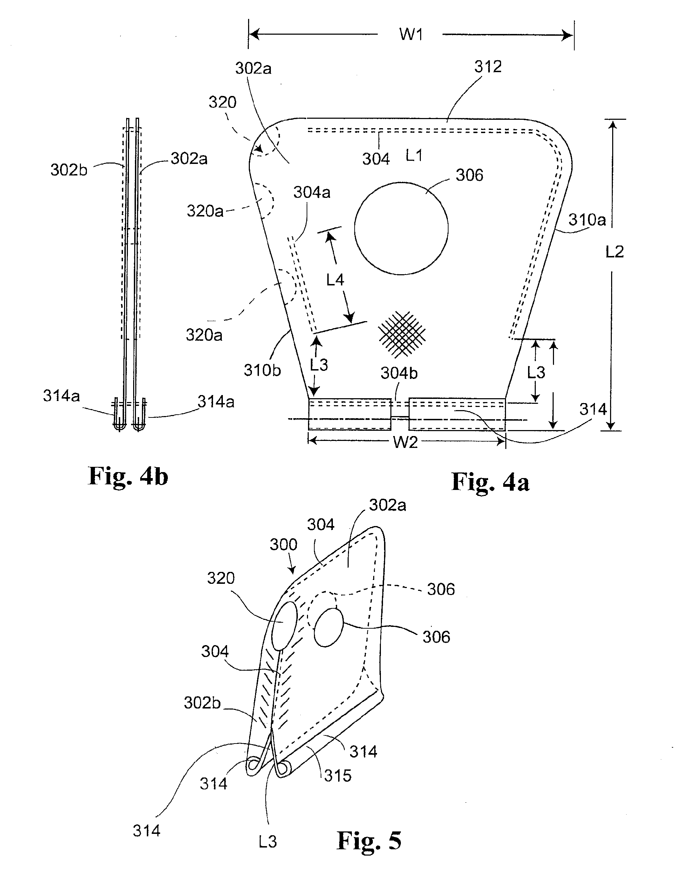

FIGUREs 4a, 4b, 5 and 6 show the details of an inner bag or sac 300. The bag or sac 300 may be constructed of one or more layers or panels of material that are sewn, or otherwise joined, together to form the sac. In the present embodiment, the bag 300 is formed of two generally identical panels of material 302a, 302b that are sewn together along one or more seam lines 304, 304a, 304b. Both of the panels 302a, 302b include an opposed opening 306 having a diameter D. Opening 306 is offset from the top 312 of the bag by a dimension L1. These openings 306 facilitate the flow of inflation gas from the inflator into the center of the outer bag 202 (which may flow vertically up and down) while permitting skewed inflation gas flow from the inflator through opening 306 into the outer bag.

The inner bag 300 is somewhat trapezoidal in shape but could also be rectangular or triangular or for that matter any shape that can accommodate openings such as 306 and openings along a side of the bag such as the compensating opening or openings 320 (some of which are shown in phantom line). The sides 310a, 310b of each of the panels are angled relative to the top 312 and bottom 314 of the panels. The length of each side 310a, 310b is designated by L2. One of the sew seams extends about the top 312 through side 310a, leaving an unsewn dimension designated as L3 near the bottom 314. In FIGURE 6, the unsewn portions of the sides 310a, 310 b, when installed within the bag 202, permit the bottoms of the panels 302a, 302b to be separated a sufficient amount so that these bottoms can be sewn to the top 210 and bottom 212 portions of the neck 213 of the outer airbag 202.

The sewn seam 304a extends a distance L4 along side 310b of the panels. The seam 304a begins at a dimension L3 from the bottom 314 of the panel to provide the construction shown in FIGUREs 4a, 4b and 5. The seam 304a terminates well below the top 312 of the panels, thereby creating an opening 320 along the side of the inner bag. The single compensating opening 320 can be replaced with a plurality of openings 320a (shown in phantom line) to permit gas to escape along the side of the inner bag to compensate and balance the skewed flow through openings 306. The opening 320 is generally opposite to the direction to which the airbag such as 20 tends to initially inflate in a skewed direction. The inflation gas exiting opening (or openings) 320 into the outer airbag 202 will push the outer airbag in a direction opposite to the skew direction of inflation.

Reference is made to FIGURE 4b and to the bottom 314 of each panel 302a, 302b. The remote ends of these panels at each bottom are each folded over into a respective flap 314a, 314b to reinforce each of the panels 302a, 302b. The bottoms 314 are sewn to the outer airbag through these reinforcing flaps.

FIGURE 6 is an enlarged view showing each of the bottom portions 314 of each panel 302a,b of the inner bag sewn to the main panel 205 of the outer bag along seam 304b. Prior to sewing of the inner to the outer bag the inner bag 300 is placed within the outer airbag 202.

Prior to activation, both airbags are maintained in a compact, folded orientation generally positioned upon the open mouth or top 404 of housing 400. Upon activation of the inflator 350, inflation gas will flow out of one or more of the exit ports 352, which are positioned at or near end 354 of the inflator. The axis of the inflator is shown by numeral 355. The flow characteristics of the inflator 350 are such that the inflation gas flows across the body of the inflator (parallel to the axis 355 of the inflator). If not corrected the outer airbag would inflate in a skewed direction following the inflation gas flow. The inflation gas designated by arrow 356b flows into the interior portions of airbag 202 through the two circular openings 306 in each of the panels 302a, 302b and through the opening(s) 320 (see arrows 356a), which as mentioned is situated generally opposite the flow direction of the inflation gas.

As the inflation gas inflates the inner bag, the inflation gas flows out the opening 320. This gas exiting the opening 320 pushes against an adjacent wall of the outer airbag 202 in a direction opposite to the skewed inflation gas flow, which originates at the inflator 350 and some portion of which exits openings 306. The opposite gas flow stream exiting the side opening(s) 320 compensates for the skewed flow exiting the more central openings 306. The airbag 202 now will stay generally aligned with its centerline.

Comparative tests were conducted to show the performance of an airbag module utilizing the same housing 400 and inflator 350. In one set of tests the airbag assembly 200 was used while in other tests only the outer airbag 202 was used, that is, the inner bag was eliminated. Those tests conducted without the inner bag 300 displayed the characteristic asymmetrical inflation of airbag 202 accompanied by the erratic motion of the fully inflated airbag as discussed in relation to FIGURE 1. Surprisingly, the performance of the airbag module with the inner bag 300 caused the airbag 200 to inflate symmetrically and displayed considerable stability relative to the vertical plane through the centerline or axis of the airbag.

In the preferred embodiment of the invention, the width W1 of the airbag was approximately 300 mm, width W2: 220 mm, length L2: 312 mm, length L3: approximately 92 mm, length L4: 130 mm and the diameter of the openings 306: approximately 100 mm. The unstitched length of opening 320 was about 120 mm. The volume of the outer airbag was about 130 L. The volume of the inner bag can vary between 2 -3 L.

## Claims

1. An airbag module comprising an airbag assembly (200) comprising: an inner bag (300) secured about the neck of an outer bag (202), the inner bag comprising first and second panels (203), each of which includes a first opening (306) centrally located near the top of the inner bag; the inner bag further including an additional side opening located proximate the top of one of the side areas of the inner bag and located on the same side of the bag as the exit ports (352) of an inflator (350) used to inflate the bag.

2. An airbag module as defined in claim 1 wherein each of the side areas of the inner bag (300) is open generally at the neck of the inner bag.

3. An airbag module as defined in Claim 1 or Claim 2 wherein the inflator (350) has at least one exit port (352) located on one side of a body and inflation gas exiting the at least one exit port includes an axial component of flow, which exits the exit port in an axial direction.

4. An airbag module as defined in Claim 3 wherein the inner airbag (300) is disposed about the inflator (350) to receive inflation gas before the inflation gas can substantially affect a trajectory of the inflating outer airbag (202), the inflation gas flowing within the inner airbag in at least the axial direction, the inner airbag including first and second openings to direct inflation gas into the outer bag (202) with components of gas flow exiting the second opening(s) at least a skewed angle while a portion of the gas flow may optionally flow in a vertical up and down direction.

5. An airbag module as defined in Claim 4 wherein the inner bag (300) also includes a third opening (320) disposed near a remote side of the inner bag for directing inflation gas into the outer bag (202) in a direction generally opposite to the axial direction.

6. An airbag module as defined in Claim 1 wherein the airbag assembly (200) is configured to inflate along a first axis, and inflation gas flows within the inner airbag in at least the axial direction, which is generally perpendicular to the first axis, the inner airbag (300) including first and a second openings, each opening oppositely facing and oriented along a second axis generally perpendicular to the first axis and to the axial direction, the first and the second openings configured to direct inflation gas into the outer bag (202) with components of gas flow exiting the second opening(s) at least a skewed angle while a portion of the gas flow exits the first and second openings oppositely along the second axis the inner bag also including a third opening disposed along a side of the inner bag for directing inflation gas into the outer bag where the gas exiting the third opening includes at least a component of flow in a direction generally opposite to the axial direction.
